# EUROPEAN PATENT APPLICATION

(11) **EP 2 712 721 A1**
(43) Date of publication of application: **02.04.2014**
(21) Application number: 12186505.9
(22) Date of filing: 28.09.2012
(51) Int. Cl.: B29C 45/26, B29C 45/17, B29C 45/56

(54) **A method and apparatus for injection moulding of an elongated hollow article**

(71) Applicant: HOLLISTER INCORPORATED, Libertyville, Illinois 60048-3781 (US)
(72) Inventor: Montes de Oca Balderas, Horacio, County Mayo (IE)
(74) Representative: Høiberg A/S

(57) **Abstract**

An apparatus and a method for injection moulding of an elongated hollow article, such as a urinary catheter, said apparatus comprising a mould comprising an elongated central mould core (2), an outer mould (1) defining the outer peripheral surface of the article, wherein the mould core and the outer mould defines an elongated mould cavity (3) having a first end (10) and a second end (11) and a tubular cavity section therebetween, where the first end is defining the first tip geometry of the article and the second end is defining the second tip end of the article; wherein said outer mould is provided with a track in which a movable inlet member (4) having an inlet opening (5) for the liquid moulding compound is slidably arranged; and wherein a movable limiter insert piston (16) is provided in the cavity (3) adapted to be retracted in the cylindrical cavity section from a first advanced position to a retracted position at the second end of the cavity so as to expand the cavity as the limiter insert piston is retracted and moulding compound is injected into the cavity.

## Description

The present disclosure relates to a method and apparatus for injection moulding of an elongated hollow article, such as a urinary catheter.

### Background art

As explained in US 4,750,877 there is a need in the art of moulding plastic products to be able to mould a plastic part having a relatively small diameter hole extending therethrough.

Especially in the field of medical products, such as catheters, it is important to exert great care in maintaining the constant diameters of both the outer surface and the central hole extending through a catheter product since this has the effect of maintaining a substantially straight shank in the finished tubular product. Also, the product must be constructed to have a consistent flex pattern and avoid "kinking" when bent or flexed. Often, such moulded plastic parts are required to have a thin wall of necessarily constant thickness with a longitudinally extending channel extending therethrough.

Previously, especially in the art of injection moulding, when plastic is melted, and forced to flow into a cavity about a fine, small diameter core, the pressure of injection forcing the melt into the mold cavity if not adequately balanced during the moulding operation tends to cause the thin diameter core to be displaced from its substantially centred, straight line configuration relative to the central axis of the mould cavity. This displacement is of course undesirable since a straight line configuration of the central hole as well as the shank portion of the product is required. Such displacement of the core pin relative to the interior surface of the mould cavity is also frequently caused by what may be considered an imbalance in the flow characteristics of the hot melt as it enters the mould cavity and passes along the length thereof in substantially surrounding relation to the core pin. Such imbalance may be caused by a number of factors but also has the tendency to cause uneven forces to be exerted on the core pin tending to cause its displacement from the aforementioned and preferred straight line configuration. For these reasons, the prior art has generally been limited to relatively short tubular lengths in relation to the diameter of the hole through it. If, for example, the tubular product is to be relatively long, which is quite common in the medical industry, a small hole, especially a hole in a thin walled tube is extremely difficult to make with any great degree of accuracy. In addition, different materials provide different problems.

Another problem generally associated with the injection moulding technique of products of the type referred to above is the breakdown in the intensity of the plastic material utilized to form the tubular product when the material is forced to travel along what may be referred to as a circuitous path from the point of leaving the injection nozzle to the point of entering and passing along the length of the mould cavity. This is particularly true when the plastic material, after being melted, is forced to travel along a circuitous path or a path including one or more right angles at a relatively high speed. Attempts to slow the speed of injection of the inflowing melt however have met with little success especially in the formation of thin walled tubular products. This is primarily due to the fact that the melt rapidly cools and therefore hardens as it travels along the length of the mould cavity especially at slow speeds. Accordingly, when using injection moulding techniques at such slow speeds, attempts have been made to raise the temperature of the plastic material to a somewhat higher than normal temperature, prior to injection to overcome the problems of the prior art. This higher temperature results in a degradation of many plastic materials which has obvious disadvantages in the making of thin walled tubular products.

US 2,443,053 discloses a method and an apparatus for manufacturing hollow cylindrical plastic articles with a moving core, which is moved during the injection of moulding material through an annular inlet in the stationary outer moulding member. However, according to the moulding technique disclosed herein, the first end section of the article is formed whereafter a tubular section of the article is formed. However, there are limitations to which designs the article can have when moulded according to this method as only the front end of the article can be provided with a special design as the rest of the article must have a cylindrical shape.

From US 7,871,261 and US 7,910,044 a method and an injection moulding apparatus for producing profiled elongated articles are disclosed where a moving inlet is provided for a moving moulding core.

From EP 1 165 567 there is known a gas assisted injection moulding technique. However, this technique only allows making short catheters.

### Summary

As explained above, one of the technical factors limiting the use of conventional injection moulding for catheter manufacture is the high injection pressures required to fill the cavity and the difficulty of producing long tubular parts, e.g. up to and in excess of 40 cm, with adequate internal and outer diameter tolerances and good reproducibility. Therefore, it is an object of the disclosure to provide an improved method and apparatus for injection moulding of elongated hollow articles, in particular for the manufacture of urinary catheters.

The disclosure consists of a method and an apparatus for injection moulding of an elongated hollow article, such as a urinary catheter, comprising a mould comprising an elongated central mould core, and an outer mould defining the outer peripheral surface of the article, wherein the mould core and the outer mould defines an elongated mould cavity having a first end and a second end and a cylindrical cavity section therebetween, where the first end is defining the first tip geometry of the article and the second end is defining the second tip end of the article; wherein said outer mould is provided with a track in which a movable inlet member having an inlet opening for the liquid moulding compound is slidably arranged; and wherein a movable limiter insert piston is provided in the cavity adapted to be retracted in the cylindrical cavity section from a first advanced position to a retracted position at the second end of the cavity so as to expand the cavity as the limiter insert piston is retracted and moulding compound is injected into the cavity.

Hereby an injection moulding technique with a moving mould is provided. The moving mould provides a drag force to transport a viscous melt of moulding material to fill the elongated cavity and minimizing the injection pressure required to make an article with a predetermined tip design at one end and a predetermined shape at the other end, in particular a tipped urinary catheter, including a funnel connector portion of the opposite end, produced in a single polymer processing operation.

In order to ease the ejection of the moulded article, the outer mould preferably comprises two half parts which are detachable, such as an upper and a lower half part.

According to the disclosure, the inlet member is preferably moving in the track of the outer mould, preferably in the upper half part, from a first position near the first end section of the cavity to a second position near the second end section of the cavity. Preferably, the movable inlet member is provided with an annular cooling section downstream the inlet opening and a heated section upstream the inlet opening. This is advantageous as it is hereby ensured that as the mould moves the injected polymer material solidifies, helping to support the mould core and hindering its deflection from the long axis of the article due to the injection pressure whereby a good control of the inner and outer diameter of the article during the moulding process is ensured.

Preferably, the limiter insert piston is moved together with the inlet member and the mould core until reaching its second end moulding position at the second end. Hereby the continuous moving injection mould can be finalised with a complex geometry at the second end.

According to a first embodiment, the inlet member is moving together with (i.e. stationary relative to) the mould core. Moreover, the outer mould is preferably adapted to be moving during the injection moulding and the central mould core is stationary until the moulding process is finished whereafter the mould core is retracted for ejection of the moulded component.

It is found advantageous that the cavity of the second end is provided with an outer peripheral surface defining an end geometry larger and the outer diameter of the cavity of the cylindrical section of said cavity. This allows for the manufacture of more complex geometry at both ends of the elongated article.

In an embodiment of the disclosure, the tubular cavity is cylindrical with a circular cross-section. However, it is realised that other cylindrical cross-sectional shapes may be provided.

Advantageously, the disclosure provides the option of providing at least a section of the inner surface of the outer mould with a predetermined patterning for moulding such patterning on the surface of the article.

In order to assist in ensuring a predetermined inner surface of the article, it is found advantageous that the elongated mould core is provided with a fluid channel, which is in flow connection with a fluid source, such as a pressurised air source providing air through the fluid channel. The fluid channel is in flow communication with the first end of the mould cavity at the distal end mould core, and in connection with the fluid source, such as the pressurised air source and at the second end of the fluid channel.

Using the method and apparatus according to the present disclosure is found particular advantageous that the elongated hollow article is a catheter with the first end geometry being the proximal tip end of the catheter and the second end being the funnel-shaped connector end of the catheter.

### Detailed description of the drawings

In the following the disclosure is described in more detail with reference to the drawings, in which:
- Fig. 1: is a schematic cross-sectional view of the initial position of the moulding apparatus according to a first embodiment of the disclosure
- Fig. 2: is a cross-section along the section A-A of fig. 1;
- Fig. 3: is a top view of the moulding material inlet region of the apparatus of fig. 1;
- Fig. 4: is a schematic cross-sectional view of the moulding apparatus of fig. 1 during the moulding process;
- Fig. 5: is the same as the moulding process is nearing its completion;
- Fig. 6: is the moulding apparatus showing the moulding of the second end of the article; and
- Figs. 7 to 9: show the steps of ejecting the moulded article.
- Fig. 10: is a schematic cross-sectional view of the initial position of the moulding apparatus according to a second embodiment of the disclosure
- Fig. 11: is a cross-section along the section B-B of fig. 10;
- Fig. 12: is a schematic cross-sectional view of the start of the moulding apparatus;
- Fig. 13: is a cross-section along the section C-C of fig. 12;
- Figs. 14 and 15: are schematic cross-sectional views of the moulding apparatus of figs. 10-13 during the moulding process;
- Fig. 16: is the moulding apparatus showing the moulding of the second end of the article; and
- Figs. 17 to 20: show a schematic cross-sectional view and a front cross-section of the moulding apparatus of figs. 10-16 during the step of ejecting the moulded article.

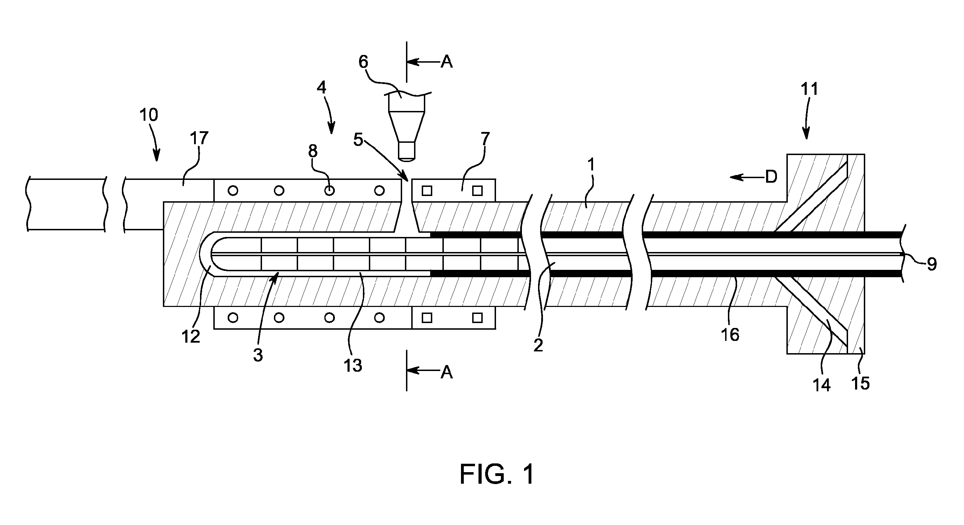

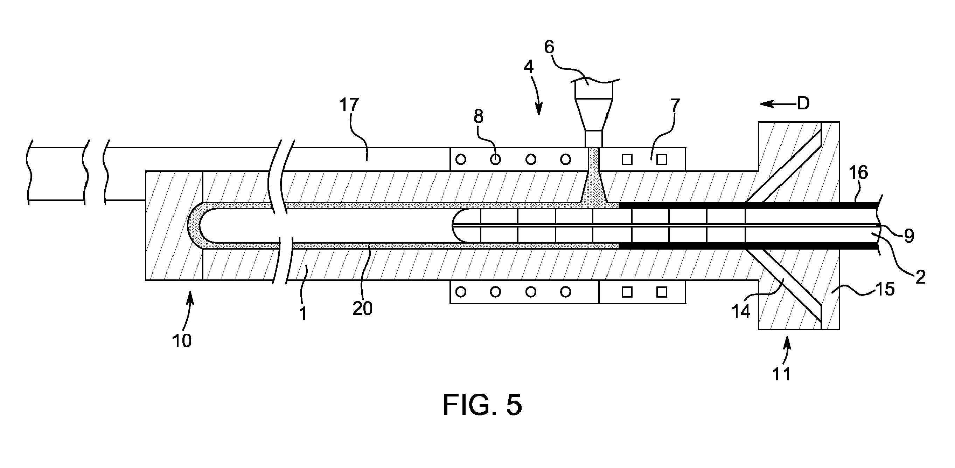

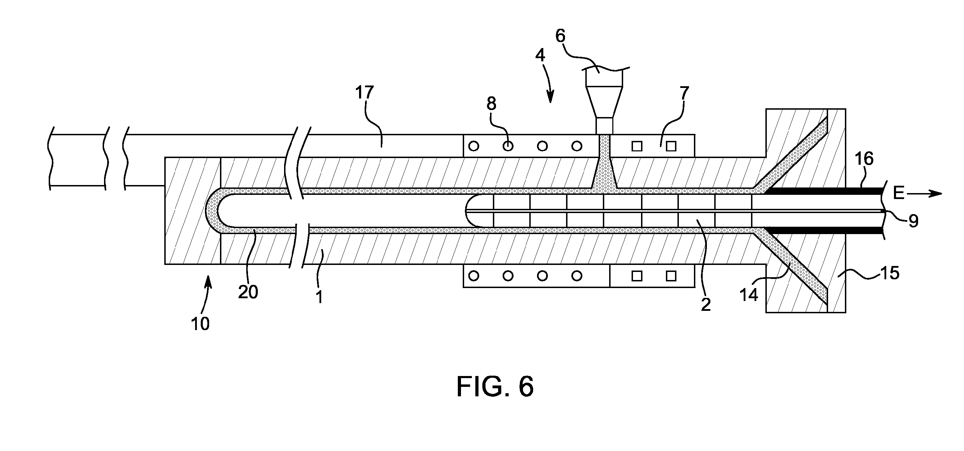

With reference to figure 1, the moulding apparatus according to a first embodiment of the disclosure is shown. The apparatus comprises an elongated outer mould 1 and an elongated mould core 2 and a mould cavity 3 defined therebetween. The moulding apparatus has a first end 10 and a second end 11. At the first end the first end mould cavity 12 is provided between the first end section of the outer mould 1 and the tip of the mould core 2. The mould cavity 3 extends from the first end section cavity 12 through a cylindrical mould cavity 13 to a second end mould cavity 14. At the second end 11 the outer mould 1 is provided with an end mould member 15 defining the second end geometry of the article as the end mould member 15 defines the end of the second end cavity 14. Surrounding the mould core 2 a cylindrical movable cavity limiting piston 16 is provided to define the end of the mould cavity 3 as the moulding process starts and until the final stage of the moulding process sets in (as explained below with reference to the further figures) where the moveable piston 16 is retracted to a position where flow communication to the second end cavity 14 is established (see figs. 5 and 6).

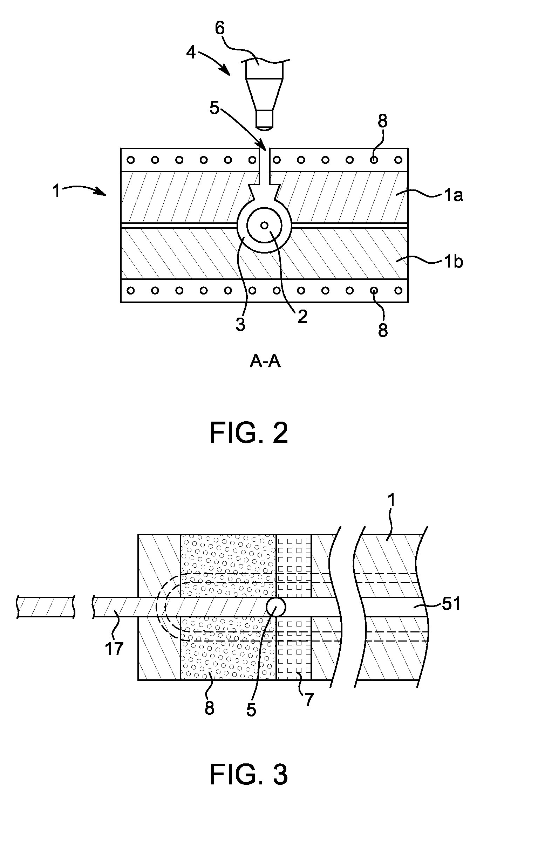

A moveable inlet member 4 is provided axially sliding along a track 51 the outer mould member 1. This movable inlet member 4 is provided with an inlet opening 5 which is in flow communication with a liquid moulding material source 6. The inlet member 4 is adapted to move relative to the outer mould 1 from the start position at the first end 10 (see fig. 1) to the finishing moulding process position at the second end (see fig. 6). The inlet member 4 is provided with a cooling section 8 downstream the inlet opening 5 and a heating section 7 upstream the inlet opening 5. As shown in figures 2 and 3, the outer mould is divided into an upper part la and a lower part 1b. In the upper part la a longitudinal track 51 is provided extending from the first end 10 to the second end 11 of the mould 1. The inlet member 4 is provided on the outer side of the upper mould part 1a and the inlet opening 5 is positioned in the track 51.

In the first embodiment, the inlet member 4 is held stationary by a guide rail 17. The outer mould 1 is adapted to move relative to the inlet member 4 as well as the mould core 2 and the piston 16 which are also kept stationary during the moulding process.

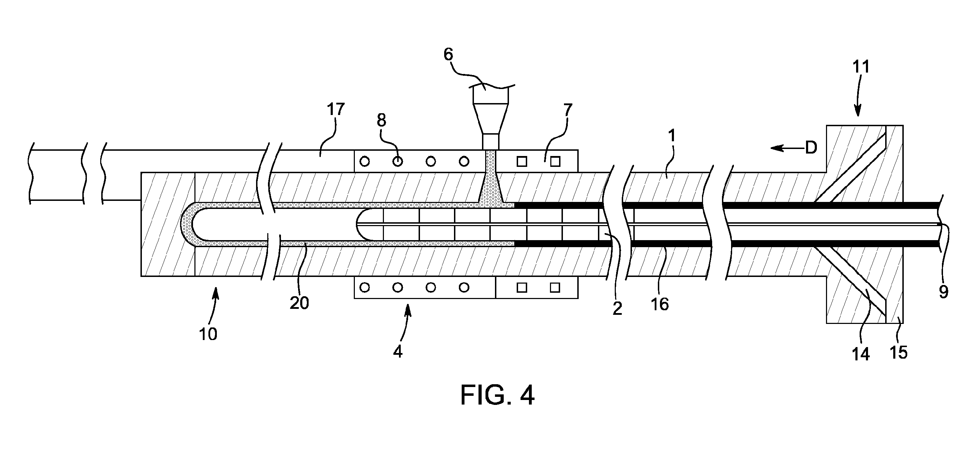

The mould core 2 is provided with a fluid channel 9 which has an opening to the mould cavity 3 at the distal first end 10 of the mould core 2. At the other end of the fluid channel 9 a pressurised air source (not shown) is provided. As the moulding process gets underway pressurised air is provided through the fluid channel 9 into the cavity 3 is provided and into the hollow portion of the article during the moulding. The pressurised air is provided inside the article during the moulding to assist to controlling the inner surface of the article as the mould core during the moulding process leaves the inner surface of the article exposed (see figs. 4 to 7). The fluid channel can also be used for any other fluid than air, such as a gas composition, a liquid mixture, a reactive liquid mixture, etc.

In an alternative to the shown embodiment, it is realised that the disclosure may also be used for the formation of profiles, such as tubes with multiple layers, for example a bi-layer, tri-layer tubes, etc. This may be achieved by providing more than one inlet member.Yet another embodiment allows making catheters with variable stiffness along the catheter length. Variable stiffness catheters facilitate catheter insertion and handling to the user. This embodiment requires injecting more than one polymer material.

The moulding process according to the first embodiment of the disclosure is illustrated in the figures 1 and 4 to 9. In figure 1 the moulding apparatus is in its initial position where the outer mould 1 is positioned in a first position over the mould core 2 so that the first end cavity 12 forms the tip of the article to be produced in the moulding apparatus. The moulding process starts in this position (fig. 1) as liquidised moulding material is injected through the inlet opening 5 and into the first end cavity 12 and fills the cavity to form the tip portion of the article. As the moulding material enters the cavity 11, it solidifies due to the cooling section 8 of the inlet member. When the first end cavity 12 is almost filled, the outer mould 1 begins to move in the direction D (see arrow D in figures 1, 4 and 5) and the injected material 20 continues to flow and thereby form the cylindrical section 13 of the cavity 3 (see fig. 4). Simultaneously, pressurised air is supplied through the fluid channel 9 in the mould core 2 in order to assist in forming the inner surface of the hollow article and avoid the formation of a vacuum inside the portion of the article which is now moulded and sits in the form as the mould core 2 is retracted from the inside of the article - or rather as the article is moved together with outer mould 1 relative to the stationary mould core 2. In order to facilitate the injection of liquid material into the cavity, the inlet member 4 heats up the mould upstream the inlet opening 5 so that the material 20 is kept liquidised in the part of the cavity underneath the inlet 5 and is then cooled as the material 20 fills the mould cavity 3 downstream the inlet opening 5 so that the material solidifies.

The outer mould is moved until its final position which is shown in fig. 5. When this position is reached, the outer mould 1 becomes stationary relative to the inlet member 4 and the mould core 2, but the movable limiter piston 16 will now be retracted as shown in fig. 6 thereby establishing liquid flow communication with the second end cavity section 14 so that the second end portion of the article is moulded as the liquid moulding material 20 flows into this cavity section 14.

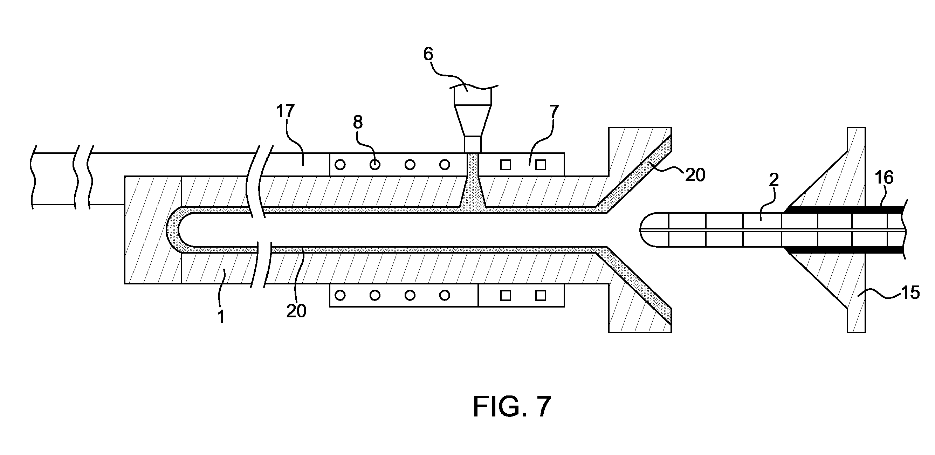

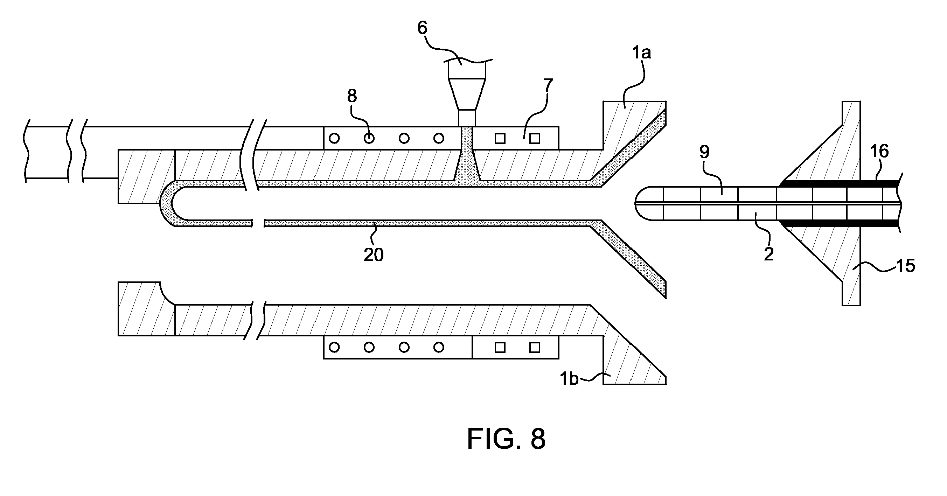

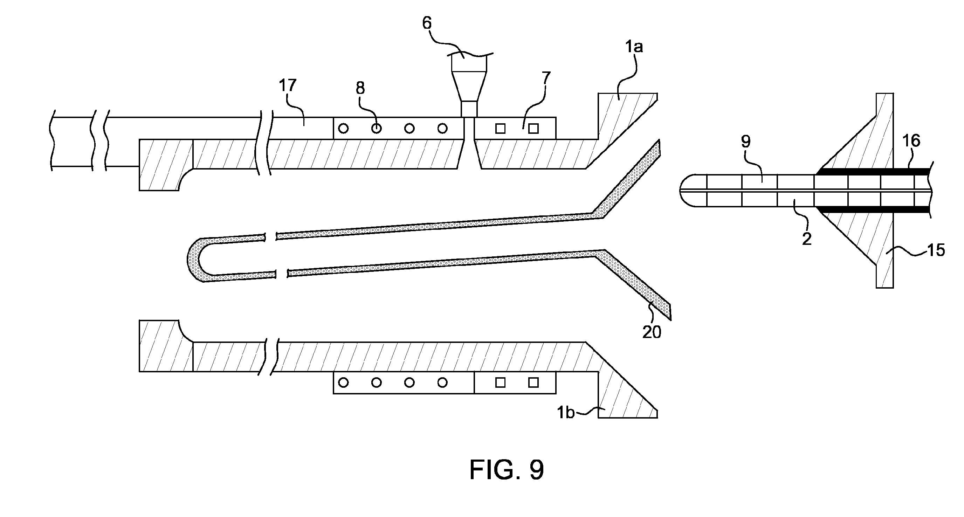

After the second end of the article 20 is moulded, the article 20 is ejected from the mould as shown in figures 7 to 9. The mould core 2, the limiter piston 16 and the end mould member 15 are retracted so that these apparatus components are clear of the article (see fig. 7) and then the outer mould 1 is disassembled (see fig. 8) and the article 20 is expelled from the mould (see fig. 9).

It is realised by the disclosure that the method and apparatus allows for adding a predetermined pattern on the catheter surface. For example the inner surface of the outer mould 1 (fig. 1) can be machined or fabricated in such a way that it is possible to add a pattern so that when the molten polymer is moulded the catheter surface acquires this pattern. This pattern on the surface can facilitate application of wetting agents and coating layers that are typically used to improve lubricity of catheters and facilitate insertion into the human body

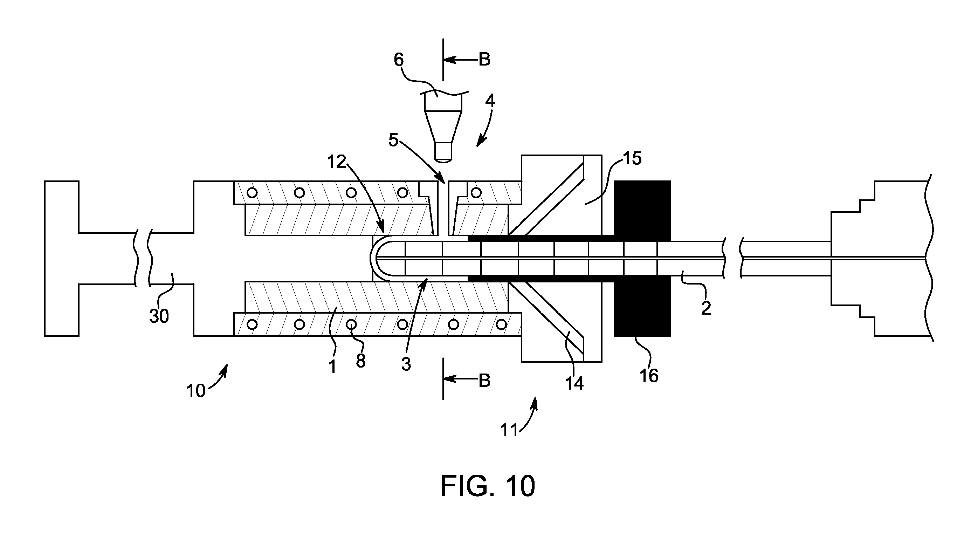

With reference to figures 10-20 a second embodiment of the disclosure is shown where the outer mould 1 is stationary and the central mould core 2 is moved during the moulding process.

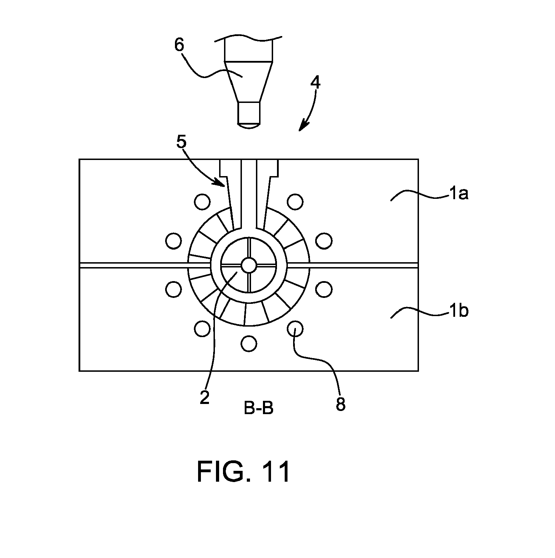

The initial position of the moulding apparatus is shown in fig. 10, where the mould core 2 is retracted towards the second end 11 and the limiter piston 16 is positioned so that flow communication from the cavity 3 to the second end cavity 14 is blocked. In front of the tip end cavity 12 a movable tip mould piston 30 is provided which is movable together with the mould core 2 as the moulding process progresses. The inlet 4 is arranged as described above. The cross-section of the moulding apparatus at the inlet 4 is also shown in fig. 11.

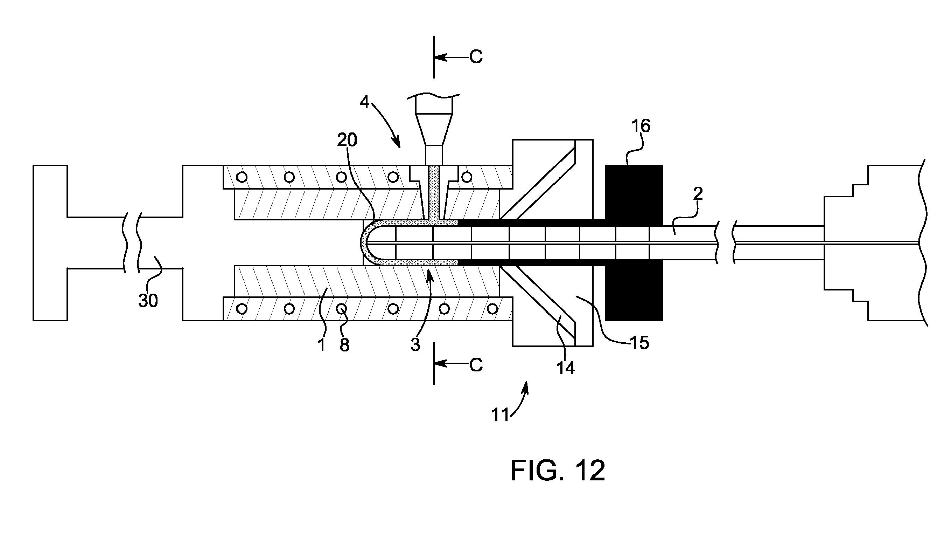

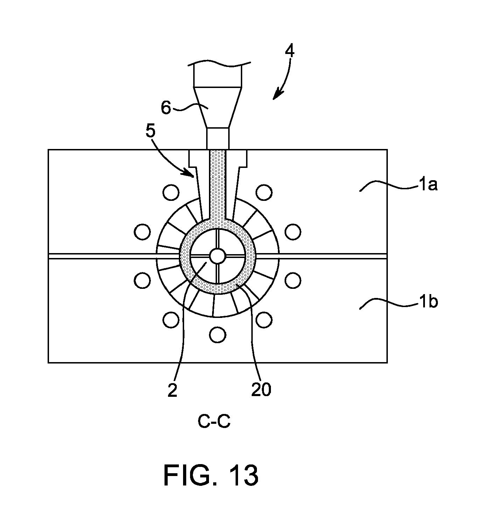

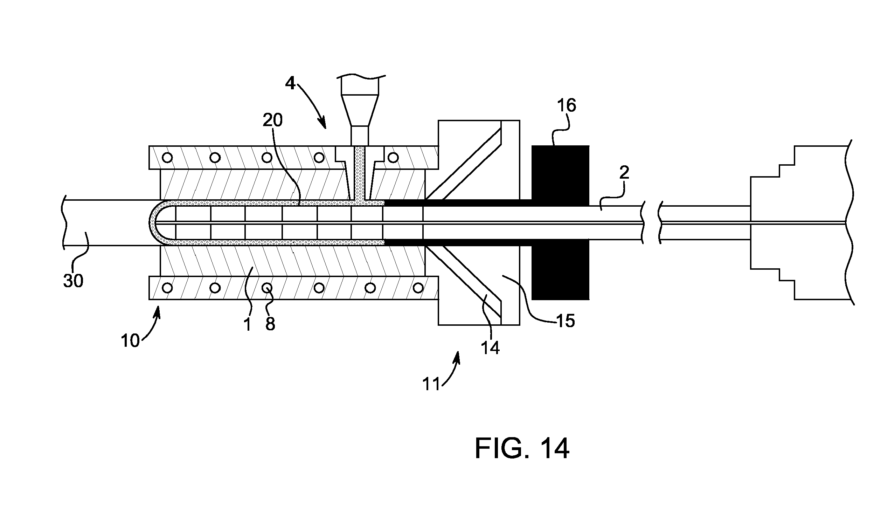

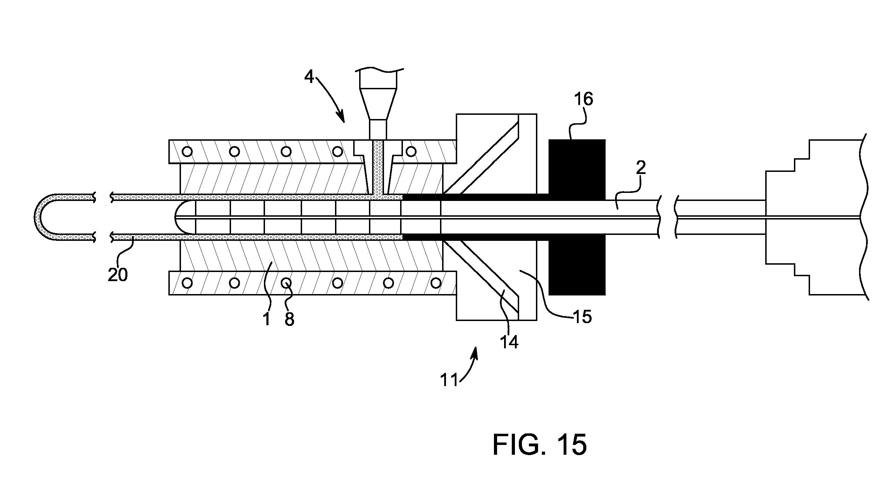

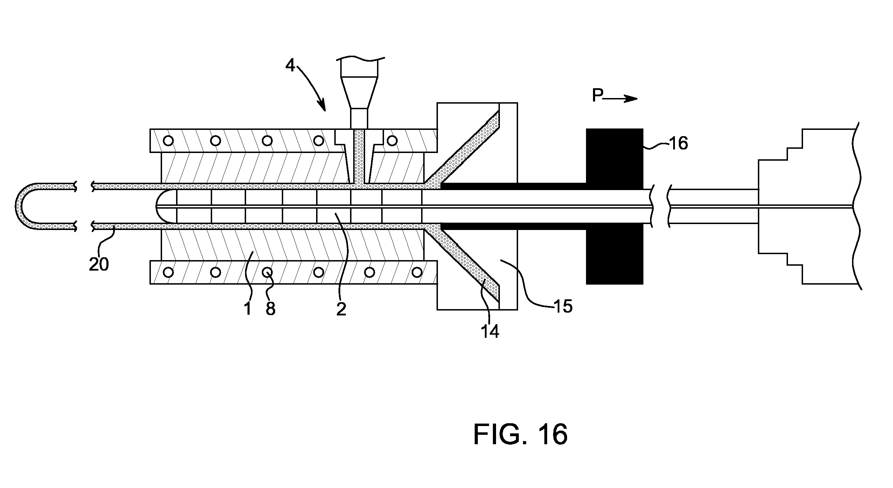

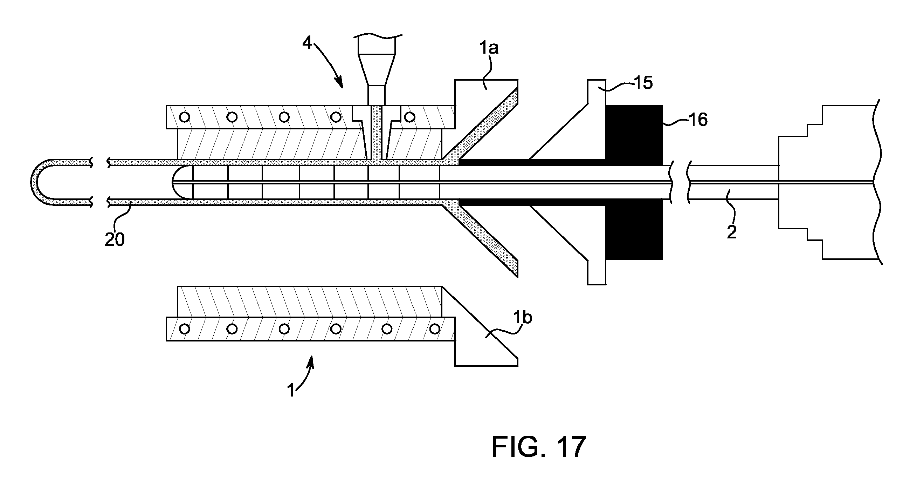

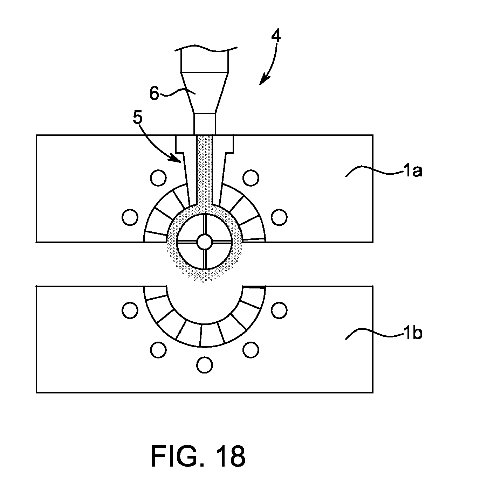

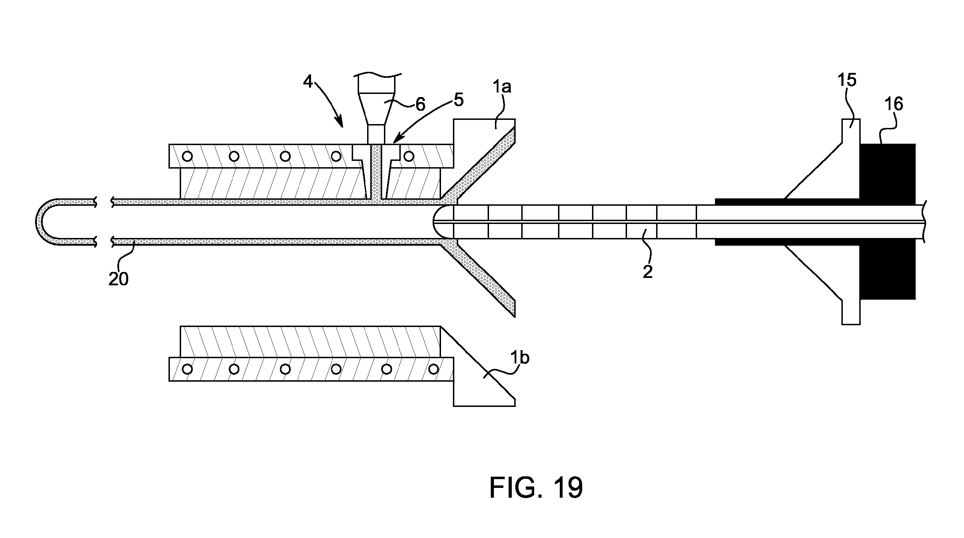

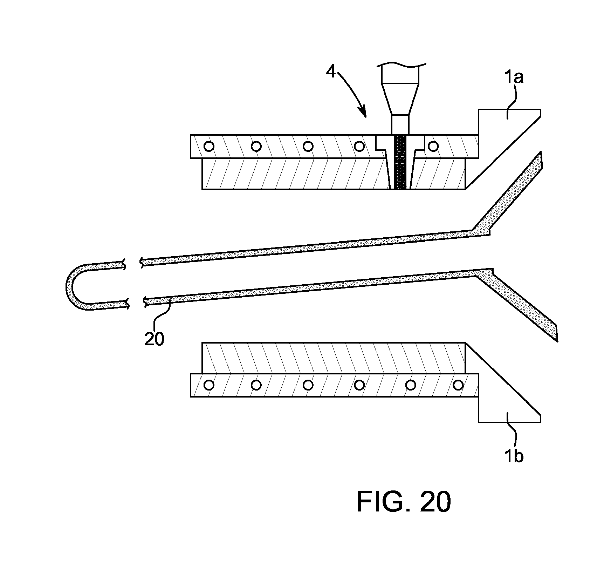

Liquidised moulding material 20 is advanced into the cavity 3 as shown in fig. 12 and fig. 13 as the moulding process starts. As shown in fig. 14, the mould core 2 is advanced in the direction from the second end t11 to the first end 10 and the tip mould piston 30 is moved together with the mould core 2 until the desired length of the article is reached, as indicated at fig. 15. When this final position is reached, the limiter piston 16 is retracted as shown by the arrow P in fig. 16 whereby the liquidised moulding material flows into the second end cavity 14. When this cavity 14 is filled the moulding process is finished and the relevant parts of the moulding apparatus are detached, as shown in figs. 17 and 18. The outer mould 1 comprises an upper part 1a and a lower part 1b which are detached as well as the end moulding member 15 is retracted. Thereafter, the mould core 2 is retracted together with the end mould member 15 and the piston 16, as shown in fig. 19 so that the article 20 is ejected from the mould as shown in fig. 20.

This second embodiment is advantageous as the same mould can be used for manufacturing articles of different lengths without changing any of the components.

## Claims

1. An apparatus for injection moulding of an elongated hollow article, such as a urinary catheter, said apparatus comprising
a mould comprising
an elongated central mould core
an outer mould defining the outer peripheral surface of the article, wherein
the mould core and the outer mould defines an elongated mould cavity having a first end and a second end and a tubular cavity section therebetween, where the first end is defining the first tip geometry of the article and the second end is defining the second tip end of the article; wherein
said outer mould is provided with a track in which a movable inlet member having an inlet opening for the liquid moulding compound is slidably arranged; and wherein
a movable limiter insert piston is provided in the cavity adapted to be retracted in the cylindrical cavity section from a first advanced position to a retracted position at the second end of the cavity so as to expand the cavity as the limiter insert piston is retracted and moulding compound is injected into the cavity.

2. An apparatus according to claim 1, wherein the outer mould comprises two half parts which are detachable, such as an upper and a lower half part.

3. An apparatus according to claim 1 or 2, wherein the inlet member is moving in the track of the outer mould, preferably in the upper half part, from a first position near the first end section of the cavity to a second position near the second end section of the cavity.

4. An apparatus according to any of the preceding claims, wherein the movable inlet member is provided with an annular cooling section downstream the inlet opening and a heated section upstream the inlet opening.

5. An apparatus according to any of the preceding claims, wherein the inlet member is moving together with the mould core.

6. An apparatus according to claim 5, wherein the limiter insert piston is moved together with the inlet member and the mould core until reaching its second end moulding position at the second end.

7. An apparatus according to any of the preceding claims, wherein the outer mould is moving during the injection moulding and the central mould core is stationary until the moulding process is finished whereafter the mould core is retracted for ejection of the moulded component.

8. An apparatus according to any of the preceding claims, wherein the cavity of the second end is provided with an outer peripheral surface defining an end geometry larger and the outer diameter of the cavity of the cylindrical section of said cavity.

9. An apparatus according to any of the preceding claims, wherein the elongated mould core is provided with a fluid channel which is in flow communication with the first end of the mould cavity at the distal end mould core, and in connection with a fluid source and at the second end of the fluid channel.

10. An apparatus according to claim 9, wherein the fluid channel is in flow connection with a pressurised air source providing air through the fluid channel.

11. An apparatus according to any of the preceding claims, wherein the elongated hollow article is a catheter with the first end geometry being the proximal tip end of the catheter and the second end being the funnel-shaped connector end of the catheter.

12. An apparatus according to any of the preceding claims, wherein at least a section of the inner surface of the outer mould is provided with a predetermined patterning for moulding such patterning on the surface of the article.

13. An apparatus according to any of the preceding claims, wherein the tubular cavity is cylindrical with a circular cross-section.

14. A method of injection moulding of an elongated hollow article, such as a urinary catheter, said method comprising the steps of:
injecting a liquidised moulding compound into a mould comprising an outer mould with a moveable inlet opening and an elongated mould core and an end limiter insert around the mould core defining an elongated mould cavity having a first end and a second end and an elongated tubular cavity section therebetween;
moving the outer mould relative to the inlet opening and the elongated mould core and the limiter insert;
at the second end retracting the limiter piston whereby the liquidised moulding compound fills the second end of the cavity; and then
retracting the mould core and thereby ejecting the moulded article by opening the outer mould core.

15. A method according to claim 14, whereby the inlet member is moving in the track of the outer mould from a first position near the first end section of the cavity to a second position near the second end section of the cavity.

16. A method according to claim 14 or 15, whereby the movable inlet member is provided with an annular cooling section downstream the inlet opening and a heated section upstream the inlet opening.

17. A method according to any of claims 14 to 16, whereby the outer mould is moving during the injection moulding and the central mould core is stationary until the moulding process is finished whereafter the mould core is retracted for ejection of the moulded component.

18. A method according to any of claims 14 to 17, whereby the cavity of the second end is provided with an outer peripheral surface defining a geometry larger than the outer diameter of the cavity of the cylindrical section of said cavity.

19. A method according to any of claims 14 to 18, whereby the forming of the inside of the article is assisted by a supply of a fluid, such as pressurised air through a fluid channel exiting the tip of the mould core.

20. A method according to any of claims 14 to 19, whereby the elongated hollow article produced is a catheter with the first end geometry being the proximal tip end of the catheter and the second end being the funnel-shaped connector end of the catheter.

21. A urinary catheter having a proximal catheter tip portion, a distal connector portion, and a tubular portion therebetween, all portions being integrally formed by performing a method according to any of claims 14-20 utilizing an apparatus of any of claims 1 to 13.

22. A catheter according to claim 21, wherein at least a section of its outer surface of the distal tip portion and/or the tubular portion mould is provided with a predetermined patterning.
